**Europäisches Patentamt**

**European Patent Office**

**Office européen des brevets**

(19)

(11) Numéro de publication: **0 239 452**
**B1**

(12) ## FASCICULE DE BREVET EUROPEEN

(45) Date de publication du fascicule du brevet: **04.07.90**

(51) Int. Cl.⁵: **B 60 T 8/40,** F 16 D 59/00

(21) Numéro de dépôt: **87400435.1**

(22) Date de dépôt: **27.02.87**

(54) **Système hydraulique de contrôle de freinage.**

(30) Priorité: **07.03.86 FR 8603227**

(43) Date de publication de la demande:
**30.09.87 Bulletin 87/40**

(45) Mention de la délivrance du brevet:
**04.07.90 Bulletin 90/27**

(84) Etats contractants désignés:
**AT CH DE GB IT LI SE**

(56) Documents cités:
**EP-A-0 075 035**
**DE-A-2 156 118**
**DE-B-1 048 168**
**GB-A- 220 863**
**GB-A- 306 909**
**US-A-4 012 082**

(73) Titulaire: **HAGGLUNDS DENISON**
**14, route du Bois Blanc**
**F-18100 Vierzon (FR)**

(72) Inventeur: **Peignier, Jacques**
**Tholomaz**
**F-74140 Douvaine (FR)**

(74) Mandataire: **Boireau, Jacques et al**
**Office Blétry 2, boulevard de Strasbourg**
**F-75010 Paris (FR)**

Courier Press, Leamington Spa, England.

EP 0 239 452 B1

## Description

L'invention concerne un système hydraulique de contrôle de freinage, monté sur un appareil à freiner et agissant sur le dispositif de freinage de cet appareil pour réguler le freinage selon les besoins.

Le freinage d'engins comme les engins de transport à câble (téléphériques, convoyeurs, machines de mines, treuils, cabestans, guindeaux par exemple), ou de divers véhicules nécessite un contrôle précis qui se fait généralement par l'intermédiaire de capteurs de vitesse et d'un asservissement électronique. Il est donc nécessaire de prévoir une interface, avec de ce fait des risques accrus de défaillance et un certain temps de réponse. En outre de tels systèmes fonctionnent à l'électricité, ce qui contraint à prévoir une source auxiliaire en cas de coupure de courant.

Selon l'invention, il est fourni un système hydraulique de contrôle de freinage, comportant dans un circuit hydraulique un capteur hydraulique de vitesse du type pompe volumétrique, entraîné par l'appareil à freiner, qui alimente un moteur hydraulique volumétrique entraînant lui-même un volant d'inertie, une valve de contre-pression qui fournit une contre-pression du côté refoulement du moteur durant un freinage, et une commande du dispositif de freinage agissant en réponse à un signal hydraulique fonction de la pression régnant dans le circuit hydraulique entre le capteur et le moteur.

Dans un tel dispositif, du fait de l'utilisation d'une pompe volumétrique comme capteur de vitesse et d'un moteur volumétrique, la vitesse de rotation du moteur est proportionnelle à la vitesse de l'appareil, le rapport de proportionnalité dépendant des paramètres de la pompe et du moteur.

Pour freiner l'appareil, on applique un couple de freinage au moteur par l'intermédiaire d'une contre-pression à son refoulement et on pilote le dispositif de freinage selon la pression régnant dans la conduite reliant la pompe au moteur. Si la pression augmente dans cette conduite, c'est que le capteur tourne trop vite par rapport à la décélaration du moteur et il faut augmenter le freinage sur l'appareil. Au contraire, si la pression diminue dans cette conduite, on diminue le freinage car le capteur tourne alors trop lentement par rapport à la décélaration du moteur.

On peut ainsi obtenir un contrôle précis du freinage avec un système hydraulique simple et fiable, permettant une décélération contrôlée quels qui soient la vitesse initiale et le sens de rotation de l'appareil à freiner.

La puissance hydraulique nécessaire à la commande du dispositif de freinage peut être fournie par une source extérieure ou prélevée dans le système de contrôle.

Des variantes et d'autres avantages du dispositif selon l'invention seront décrits ci-après, avec référence aux dessins annexés dans lesquels:

La figure 1 donne le schéma de principe d'un dispositif selon l'invention,

Les figures 2 et 3 constituent des variantes utilisables dans le cas de freins passifs,

La figure 4 représente le schéma d'un dispositif agissant sur des freins actifs.

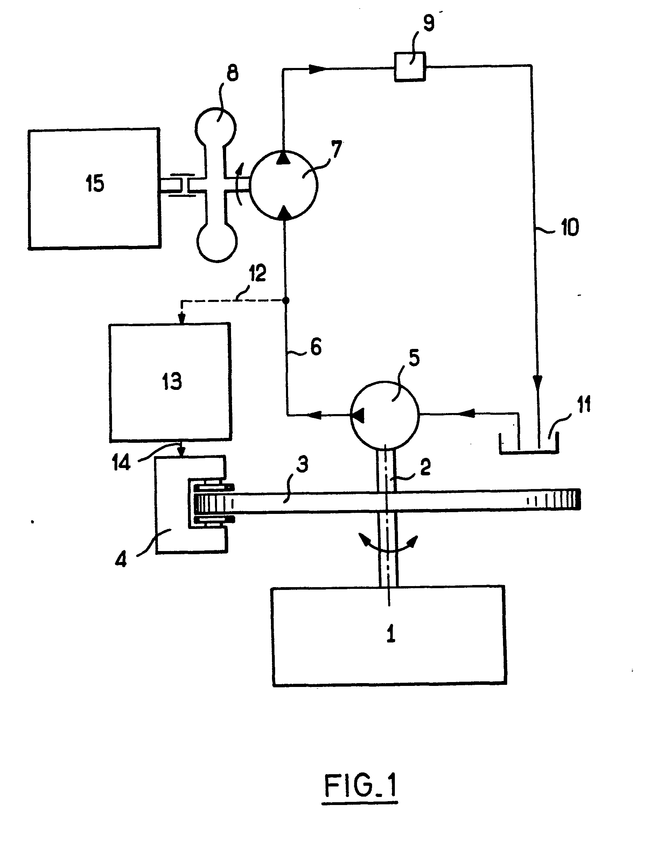

L'appareil à freiner 1, qu'il s'agisse d'un téléphérique, d'un treuil, d'une machine de mines ou de tout autre appareil, comporte un arbre de transmission 2 solidaire d'un disque ou d'un tambour de freinage 3 sur lequel agit le dispositif de freinage 4. Cet ensemble est représenté schématiquement sur la figure 1 et ne fait pas partie de l'invention.

Un capteur de vitesse, en l'occurrence une pompe volumétrique 5, est monté sur l'arbre de transmission 2 de l'appareil à freinage 1. Cette pompe alimente en fluide hydraulique provenant d'un réservoir 11, un moteur volumétrique 7 via une conduite 6. Une valve de contre-pression 9 est prévue dans la conduit 10 ramenant le fluide hydraulique au réservoir 11. Le moteur volumétrique entraîne un volant d'inertie 8. Un signal hydraulique 12 fonction de la pression régnant dans la conduit 6 est transmis à un dispositif de commande 13 qui transmet à son tour un signal de commande 14 au dispositif de freinage 4.

Le fonctionnement du dispositif est le suivant:

Lorsqu'un freinage de l'appareil 1 est nécessaire, la valve de contre-pression 9 applique une contre-pression du côté refoulement du moteur. Cette contre-pression peut être ajustée à une valeur prédéterminée ou elle peut être réglable en cours de fonctionnement. Plus la valeur de cette contre-pression sera importante, plus le freinage sera important.

L'existence de cette contre-pression au refoulement du moteur provoque la décélération du moteur 7, modifiant l'équilibre entre le moteur (7) et la pompe 5. Ceci se traduit par une variation de la pression dans la conduite 6 entre le moteur et la pompe. Comme indiqué précédemment, si la pression augmente, c'est l'indication que la pompe tourne trop vite par rapport au moteur et qu'il faut augmenter le freinage. Si la pression diminue, c'est que la pompe tourne trop lentement et qu'il faut diminuer le freinage. Le signal hydraulique 12 est transmis à un dispositif de commande 13 qui détermine l'opération à effectuer et pilote en conséquence le dispositif de freinage 4.

Des exemples pratiques de commande 13 seront décrits ci-après.

Le système de contrôle de freinage selon l'invention peut facultativement comporter un dispositif 15 permettant le déhalage dans le cas d'un téléphérique par exemple. Ce dispositif 15 consiste en un entraînement auxiliaire déconnecté du volant d'inertie en temps normal. Ce dispositif permet d'entraîner le moteur 7 et donc de contrôler la vitesse de déhalage. L'entraînement auxiliaire peut être un moteur électrique ou tout autre dispositif approprié selon les besoins et les normes de sécurité de l'appareil à freiner en cause. En temps normal le moteur sera déconnecté électriquement ou sera relié à l'arbre du moteur hydraulique par un embrayage.

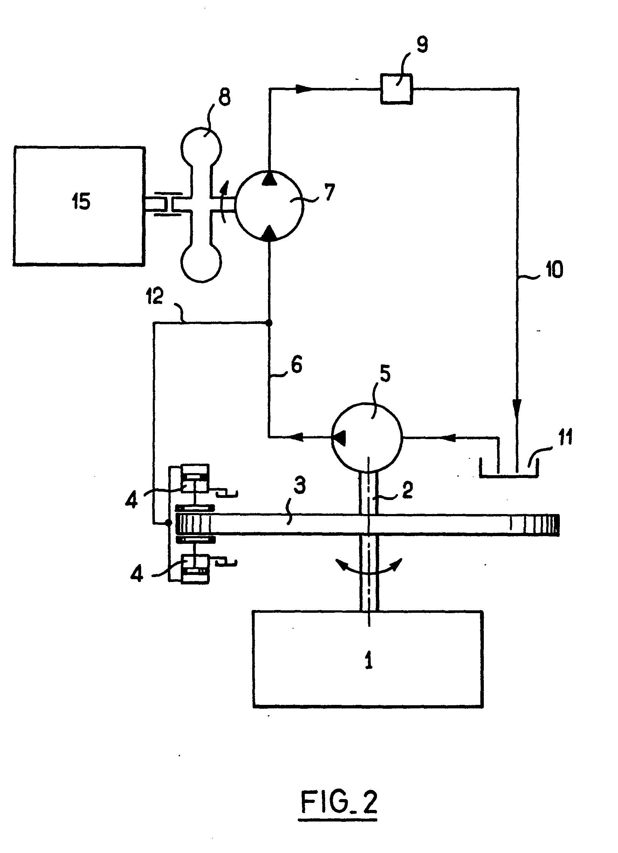

Les figures 2 à 4 illustrent les modes de réalisation particuliers du système de contrôle de freinage selon l'invention.

Sur la figure 2, le dispositif de freinage 4 est constitué par des freins passifs qui reçoivent de la pression pour freiner. Le signal hydraulique 12 peut donc leur être appliqué directement pendant le freinage, puisqu'une élévation de pression dans la conduite 6 correspond à une demande d'augmentation du freinage. Dans ce cas la puissance hydraulique nécessaire au fonctionnement du dispositif de freinage est prélevée directement sur le système de contrôle.

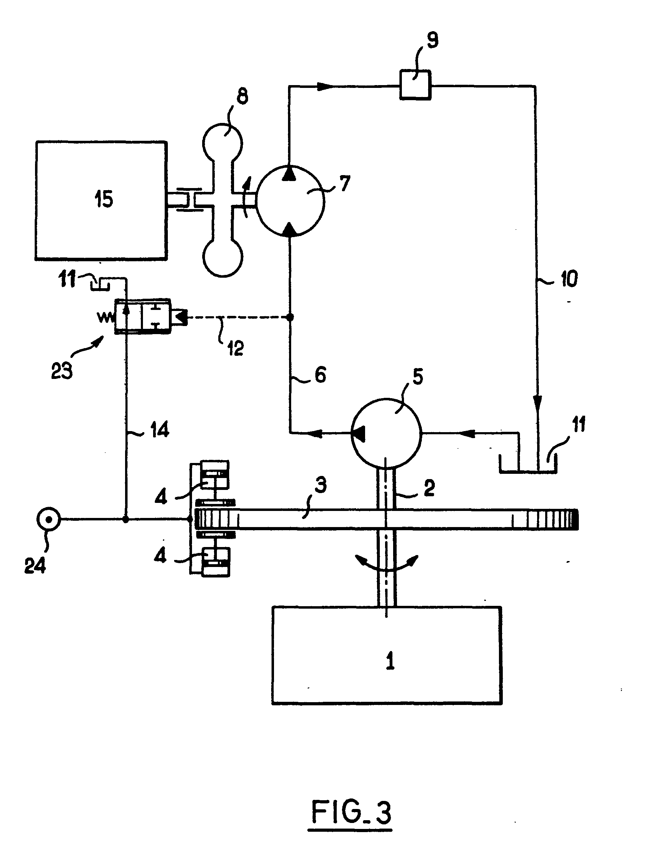

Dans le cas de freins passifs toujours, le dispositif de freinage peut être piloté par l'intermédiaire d'une valve hydraulique 23 représentée schématiquement sur la figure 3, qui lorsque le signal 12 indique une baisse de pression dans la conduite 6, réduit la pression dans les freins en reliant la conduite 14 au réservoir. Le fluide nécessaire au freinage est fourni par une source 24 qui peut être extérieure au système de contrôle (par exemple une pompe auxiliaire ou un accumulateur de pression), ou par le système de contrôle lui-même par une dérivation branchée entre le moteur 7 et la valve 9 par exemple.

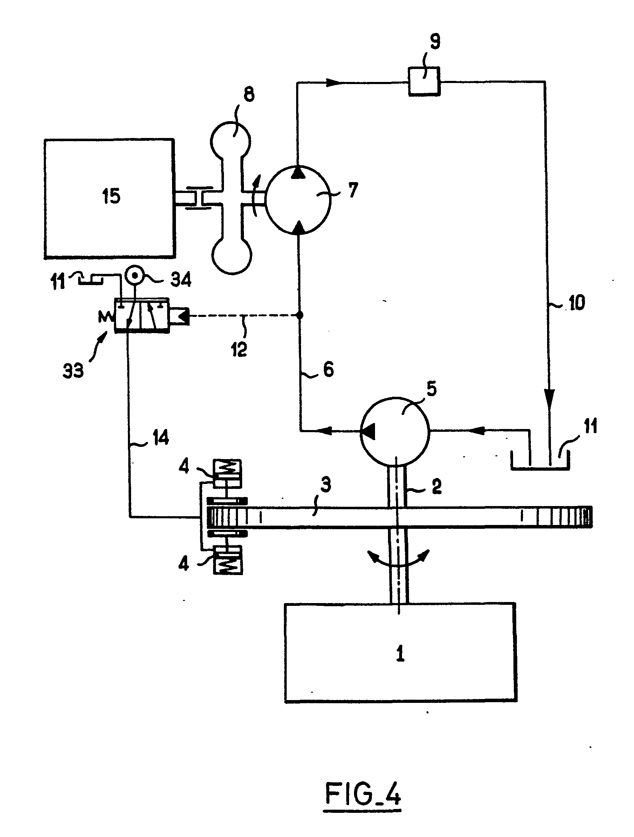

Lorsque le dispositif de freinage est constitué par des freins actifs qui reçoivent de la pression pour défreiner, le signal hydraulique 12 agit sur une valve hydraulique 33 représentée schématiquement sur la figure 4. Lorsque le signal 12 indique une diminution de la pression dans la conduit 6, donc un freinage trop important, la valve 33 envoie de la pression pour desserrer le dispositif de freinage 3, et inversement lorsque la pression augmente dans la conduit 6, le signal 14 provoque le retour des freins en position active. La puissange hydraulique nécessaire pour desserrer les freines est fournie par une source 34 qui peut être extérieure au système de contrôle (pompe auxiliaire ou accumulateur de pression, par exemple), ou par le système de contrôle lui-même par une dérivation branchée entre le moteur 7 et la valve 9 par exemple.

D'autres variantes et modifications sont bien entendu possibles, et l'on n'en citera que quelques unes à titre d'exemples.

Lorsque l'appareil à freiner a deux directions opposées de déplacement, on utilisera une pompe volumétrique donnant un débit au même orifice quelque soit le sens de rotation.

Il est possible de contrôler plusieurs appareils et de synchroniser leurs vitesses, en prévoyant une pompe et un moteur par appareil, en reliant mécaniquement entre eux les arbres des moteurs.

L'ajustement de l'inertie du volant ou de la pression de fonctionnement du dispositif de freinage, ou le réglage de la contre-pression de freinage du moteur, de la pression du signal hydraulique de commande ou de la cylindrée de la pompe et du moteur permettent d'obtenir une décélération constante ajustable ou une décélération variable.

## Revendications

1. Système hydraulique de contrôle de freinage, monté sur un appareil à freiner et agissant sur le dispositif de freinage de cet appareil, caractérisé en ce qu'il comporte dans un circuit hydraulique, un capteur hydraulique de vitesse (5), du type pompe volumétrique, entraîné par l'appareil à freiner (1), qui alimente un moteur hydraulique volumétrique (7) entraînant lui-même un volant d'inertie (8), une valve de contre-pression (9) fournissant, durant un freinage, une contre-pression du côté refoulement du moteur (7), et une commande (13) du dispositif de freinage (4) agissant en réponse à un signal hydraulique (12) fonction de la pression régnant dans le circuit hydraulique (6) entre le capteur et le moteur.

2. Système hydraulique selon la revendication 1, caractérisé en ce que la commande (13) du dispositif de freinage envoie un signal (14) d'augmentation du freinage en réponse à un signal hydraulique (12) indiquant une augmentation de pression dans la conduite (6) entre le capteur (5) et le moteur (7).

3. Système hydraulique selon la revendication 1, caractérisé en ce que la commande (13) du dispositif de freinage envoie un signal (14) de diminution du freinage en réponse à un signal hydraulique (12) indiquant une diminution de la pression dans la conduite (6) entre le capteur (5) et le moteur (7).

4. Système hydraulique selon l'une quelconque des revendications 1 à 3 caractérisé en ce que, dans le cas d'un dispositif de freinage passif, le signal hydraulique (12) est transmis directement au dispositif de freinage (3).

5. Système hydraulique selon l'une quelconque des revendications 1 à 4, caractérisé en ce que la puissance hydraulique destinée à la commande du dispositif de freinage est fournie par le système hydraulique de contrôle.

6. Système hydraulique selon l'une quelconque des revendications 1 à 5, caractérisé en ce qu'il comporte, sur le volant d'inertie (8), un entraînement auxiliaire (15) non opérationnel en service normal.

7. Système hydraulique selon l'une quelconque des revendications 1 à 6, caractérisé en ce que, dans le cas où plusieurs appareils doivent être freinés en synchronisant leurs vitesses, il comporte une pompe (5) et un moteur (7) par appareil à freiner, et en ce que les arbres des moteurs (7) sont reliés mécaniquement entre eux.

8. Système hydraulique selon l'une quelconque des revendications 1 à 7, caractérisé en ce que, dans le cas où l'appareil à freiner a deux directions opposées de déplacement on utilise une pompe volumétrique (5) donnant un débit à un même orifice quelque soit le sens de rotation.

## Patentansprüche

1. Hydraulisches Bremssteuerungssystem, das an einer zu bremsenden Vorrichtung angebracht ist und auf das Bremssystem dieser Vorrichtung einwirkt, dadurch gekennzeichnet, daß es in einem hydraulischen Kreislauf folgende Teile umfaßt: einen hydraulischen Geschwindigkeitsmesser (5) vom Typ der volumetrischen Pumpe, der von der zu bremsenden Vorrichtung angetrieben wird und einen volumetrischen hydraulischen Motor (7) speist, der selbst ein Schwungrad (8) antreibt, ein Gegendruckventil (9), das während der Bremsung einen Gegendruck zur Stauseite des Motors (7) liefert und eine Betätigungsvorrichtung (13) des Bremssystems (4), die in Abhängigkeit von einem hydraulischen Signal (12), das eine Funktion des in dem hydraulischen Kreislauf zwischen dem Geschwindigkeitsmesser und dem Motor herrschenden Druckes ist, aktiv ist.

2. Hydraulisches System nach Anspruch 1, dadurch gekennzeichnet, daß die Betätigungsvorrichtung (13) des Bremssystems ein Bremserhöhungssignal (14) auf ein hydraulisches Signal (12) hin, das eine Druckerhöhung in der Leitung (6) zwischen dem Geschwindigkeitsmesser (5) und dem Motor (7) anzeigt, sendet.

3. Hydraulisches System nach Anspruch 1, dadurch gekennzeichnet, daß die Betätigungsvorrichtung (13) des Bremssystems ein Bremsverringerungssignal (14) auf ein hydraulisches Signal (12) hin, das eine Druckverringerung in der Leitung (6) zwischen dem Geschwindigkeitsmesser und dem Motor (7) anzeigt, sendet.

4. Hydraulisches System nach einem der Ansprüche 1 bis 3, dadurch gekennzeichnet, daß bei einem passiven Bremssystem das hydraulische Signal (12) direkt auf das Bremssystem (3) übertragen wird.

5. Hydraulisches System nach einem der Ansprüche 1 bis 4, dadurch gekennzeichnet, daß die für die Betätigung des Bremssystems bestimmte hydraulische Kraft von dem hydraulischen Steuerungssystem geliefert wird.

6. Hydraulisches System nach einem der Ansprüche 1 bis 5, dadurch gekennzeichnet, daß es auf dem Schwungrad (8) einen Hilfsantrieb (15) umfaßt, der bei normalen Betrieb nicht eingesetzt wird.

7. Hydraulisches System nach einem der Ansprüche 1 bis 6, dadurch gekennzeichnet, daß es, wenn mehrere Vorrichtungen unter Synchronisieren ihrer Geschwindigkeiten gebremst werden sollen, eine Pumpe (5) und einen Motor (7) pro zu bremsender Vorrichtung umfaßt und daß die Motorwellen (7) mechanisch miteinander verbunden sind.

8. Hydraulisches System nach einem der Ansprüche 1 bis 7, gekennzeichnet durch die Verwendung einer volumetrischen Pumpe (5), die unabhängig von der Drehrichtung durch dieselbe Öffnung ausstößt, dann, wenn die zu bremsende Vorrichtung zwei entgegengesetzte Bewegungsrichtungen hat.

## Claims

1. A hydraulic braking control system, mounted on an appliance to be braked and acting on the brake system of said appliance, characterised in that in a hydraulic circuit it comprises a hydraulic speed sensor (5) of the displacement pump type and driven by the applicant to be braked (1), which sensor supplies a displacement-type hydraulic motor (7) itself dgiving an inertia flywheel (8), a counterpressure valve (9) providing, during a braking operation, a counterpressure on the discharge side of the motor (7), and a control means (13) for the brake system (4) acting in response to a hydraulic signal (12) as a function of the pressure prevailing in the hydraulic circuit (6) between the sensor and the motor.

2. A hydraulic system according to claim 1, characterised in that the control means (13) for the brake system sends a signal (14) for increasing the braking action in response to a hydraulic signal (12) indicating an increase in pressure in the line (6) between the sensor (5) and the motor (7).

3. A hydraulic system according to claim 1, characterised in that the control means (13) for the brake system sends a signal (14) for decreasing the braking action in response to a hydraulic signal (12) indicating a decrease in pressure in the line (6) between the sensor (5) and the motor (7).

4. A hydraulic system according to any one of claims 1 to 3, characterised in that in the case of a passive brake system the hydraulic signal (12) is transmitted directly to the brake system (3) [sic].

5. A hydraulic system according to any one of claims 1 to 4, characterised in that the hydraulic power for operating the brake system is provided by the hydraulic control system.

6. A hydraulic system according to any one of claims 1 to 5, characterised in that it comprises an auxiliary drive means (15) on the inertia flywheel (8), which drive means is inoperative during normal service.

7. A hydraulic system according to any one of claims 1 to 6, characterised in that in the case in which a plurality of appliances are to be braked by synchronising their speeds it comprises one pump (5) and one motor (7) per appliance to be braked, and in that the shafts of the motors (7) are connected to one another mechanically.

8. A hydraulic system according to any one of claims 1 to 7, characterised in that in the case in which the appliance to be braked has two opposite directions of travel a displacement pump (5) is used which provides a flow to the same orifice, whatever the direction of rotation.

FIG.1

FIG. 2

FIG. 3

FIG_4

4